Europäisches Patentamt

(19) European Patent Office

Office européen des brevets

(11) EP 0 781 590 A1

(12) **EUROPEAN PATENT APPLICATION**

(43) Date of publication:
02.07.1997 Bulletin 1997/27

(51) Int. Cl.$^6$: **B01D 53/94**, B01J 21/16

(21) Application number: 96120859.2

(22) Date of filing: 24.12.1996

(84) Designated Contracting States:
DE FR GB

(30) Priority: 25.12.1995 JP 336998/95
17.12.1996 JP 336905/96

(71) Applicants:
- TOYOTA JIDOSHA KABUSHIKI KAISHA
  Aichi-ken (JP)
- KABUSHIKI KAISHA TOYOTA CHUO
  KENKYUSHO
  Aichi-gun Aichi-ken, 480-11 (JP)
- CATALER INDUSTRIAL CO., LTD.
  Ogasa-gun, Shizuoka-ken (JP)

(72) Inventors:
- Aono, Norihiko
  Daito-cho, Ogasa-gun, Shizuoka-ken (JP)

- Kasahara, Koichi
  Daito-cho, Ogasa-gun, Shizuoka-ken (JP)
- Nagami, Tetsuo
  Toyota-shi, Aichi-ken (JP)
- Sato, Akemi
  Toyota-shi, Aichi-ken (JP)
- Banno, Kouji,
  c/o K.K. Toyoto Chuo Kenkyusho
  Nagakute-cho, Aichi-gun, Aichi-ken (JP)
- Watanabe, Yoshihide,
  c/o K.K Toyoto Chuo Kenkyusho
  Nagakute-cho, Aichi-gun, Aichi-ken (JP)

(74) Representative: KUHNEN, WACKER & PARTNER
Alois-Steinecker-Strasse 22
85354 Freising (DE)

(54) **Exhaust catalyst for purifying exhaust gas emitted from diesel engine**

(57) A catalyst is for purifying an exhaust gas emitted from a diesel engine, and includes a catalyst support, a catalyst carrier layer formed on the catalyst support, and at least one catalyst ingredient loaded on the catalyst carrier layer. The catalyst carrier layer has a superficial portion and an internal portion disposed inside the superficial portion, and includes an activated alumina and a heat-resistant inorganic oxide. The heat-resistant inorganic oxide includes a double-chained-structure type clay mineral, which is turned into amorphous, and constitutes the superficial portion of the catalyst carrier layer. The catalyst ingredient is selected from the group consisting of platinum, palladium, and rhodium. The catalyst can convert the diesel particulates and sulfates from being emitted, can convert HC and CO with an improved efficiency, and is also enhanced in terms of the catalyst-carrier-layer adhesion to the catalyst support.

EP 0 781 590 A1

## Description

BACKGROUND OF THE EMBODIMENT

Field of the Invention

The present invention relates to a catalyst for purifying an exhaust gas which is emitted from a diesel engine. More particularly, the present invention relates to a catalyst applied to a trapping type exhaust purifying system, or an open type straight-flow exhaust purifying system which removes harmful components, such as carbon monoxide (CO), hydrocarbons (HC), and soluble organic fractions (hereinafter referred to as "SOF"), included in an exhaust gas emitted from a diesel engine.

A trapping type exhaust purifying system or a trapping type process hereafter means an exhaust purifying system or a process wherein a wall flow type honeycomb body (diesel particulate filter (DPF)) is employed as a catalyst support. This wall flow type has a honeycomb structure wherein cell channel openings are plugged in a checkerboard fashion at one end and alternately at the other.

An open type exhaust purifying system or an open type process hereafter means an exhaust purifying system or a process wherein a straight-flow type honeycomb body is employed as a catalyst support.

Description of the Related Art

Concerning gasoline engines, the harmful components included in the exhaust gases emitted therefrom have been reduced steadily, because of severe regulations to control the exhaust gases, and because of the development of technologies to comply with the regulations.

On the other hand, the exhaust gases emitted from diesel engines have been controlled under less stricter regulations than those emitted from gasoline engines, and the technologies for processing the exhaust gases emitted from diesel engines have been developed slower so far than those for the exhaust gases emitted from gasoline engines, because of the special circumstances: namely; the diesel engines emit the harmful substances mainly as particulates. Thus, there has been a long-felt need for a process for purifying the harmful substances included in the exhaust gases emitted from diesel engines.

Conventional processes for purifying exhaust gases emitted from diesel engines developed so far can be roughly classified into a trapping type process, and an open type process. The trapping process can be further classified into a trapping type process with a catalyst, and a trapping type process without a catalyst.

According to the trapping type process without a catalyst, particulates included in exhaust gases emitted from diesel engines are trapped in order to be inhibited from being emitted. The particulates include "SOF", soot (dry soot), and sulfates. In the trapping type process, the trapped components of the particulates, such as "SOF" and soot, should usually be removed by heating to recycle a trapping element. Accordingly, the trapping type process has been suffered from the problem in that the trapping element is cracked by heating. The problem has been dealt with the countermeasures which reduce the combustion temperature by additionally employing a catalyst, for example.

According to the trapping type process with a catalyst, particulates included in the exhaust gases emitted from diesel engines are removed together with CO and HC. For instance, Japanese Examined Patent Publication (KOKOKU) No. 2-32,934 discloses such a trapping type exhaust purifying system with vanadium or a platinum-group catalyst ingredient loaded thereon.

One of the open type processes is disclosed in Japanese Unexamined Patent Publication (KOKAI) No. 3-38,255, for example. As set forth in the publication, similarly to catalysts for purifying exhaust gases emitted from gasoline engines, there is an open type "SOF" oxidizing catalyst which comprises a catalyst carrier layer formed of activated alumina or the like, and a platinum-group catalyst ingredient (i.e., an oxidizing catalyst) loaded on the catalyst carrier layer. The open type "SOF" oxidizing catalyst oxidizes "SOF" included in the diesel particulates together with CO and HC, thereby purifying an exhaust gas emitted from a diesel engine. This open type "SOF" oxidizing catalyst has a disadvantage in that it removes the dry soot, included in the diesel particulates, at a low removing rate. However, the quantity of dry soot can be reduced by improving diesel engines or fuels themselves. In addition, engineers have been studying the open type "SOF" oxidizing catalyst intensively so far, because of a big advantage: namely; no recycling is required of the open type "SOF" oxidizing catalyst.

The trapping type process with a catalyst, and the open type "SOF" oxidizing catalyst, however, employ a conventional catalyst for a purifying exhaust gases. Consequently, it is difficult to reduce the emission of the diesel particulates by the trapping type process with a catalyst or open type "SOF" oxidizing catalyst: namely; the activated alumina layer formed on a conventional catalyst for purifying exhaust gases has a property of adsorbing $SO_2$, and accordingly $SO_2$, included in the exhaust gases emitted from diesel engines, is adsorbed on the activated alumina layer. When the conventional catalyst is heated to a high temperature, the adsorbed $SO_2$ is oxidized by a catalyst ingredient loaded on the activated alumina layer. As a result, the $SO_2$ is emitted as $SO_3$ to increase the quantity of the diesel particulates. This drawback results from the fact that the $SO_2$ is not measured as the diesel particulates, but the $SO_3$ is measured as the diesel particulates. Especially, in the exhaust gases emitted from the diesel engines, gaseous oxygen exists in a sufficient amount so that the $SO_2$ is likely to be oxidized. In addition, the $SO_3$ reacts readily with water vapor, which is also present in a large amount in the exhaust gases, to generate the sulfuric acid mist.

When the $SO_2$ is emitted as it is, the $SO_2$ reacts with $O_3$ in the air to produce $SO_3$. However, the $SO_2$ reacts with $O_3$ with a low probability in the air, and it takes long to produce $SO_3$ therein. Thus, when the $SO_2$ is emitted as it is in the air, the $SO_2$ does not cause the problems so seriously as the $SO_3$ emitted in the air. Hence, it has been longed for reducing the $SO_3$ emitted in the air as much as possible.

SUMMARY OF THE INVENTION

The present invention has been developed in view of the circumstances described above. It is an object of the present invention to provide a catalyst for purifying an exhaust gas emitted from a diesel engine which can inhibit diesel particulates and sulfates from being emitted, and which can convert HC and CO with an improved efficiency.

A catalyst for purifying an exhaust gas emitted from a diesel engine according to the present invention can carry out the aforementioned object, and comprises:

a catalyst support;
a catalyst carrier layer formed on said catalyst support, having a superficial portion and an internal portion disposed inside the superficial portion, and comprising an activated alumina powder and a heat-resistant inorganic oxide;

the heat-resistant inorganic oxide comprising a double-chained-structure type clay mineral, being turned into amorphous, and constituting the superficial portion of said catalyst carrier layer; and

at least one catalyst ingredient selected from the group consisting of platinum, palladium and rhodium, being loaded on the catalyst carrier layer.

Note that the term "amorphous" herein means the state wherein the double-chained-structure-type clay mineral lacks long-range structural order.

In the present catalyst, the double-chained-structure type clay mineral, constituting the heat-resistant inorganic oxide, can preferably be sepiolite which is turned into amorphous, or sepiolite which is turned into amorphous, and to which iron elements are added by means of an ion-exchanging process.

The operations and advantages of the present catalyst for purifying an exhaust gas emitted from a diesel engine will be hereinafter described. In the present catalyst, a catalyst carrier layer is formed on a catalyst support, and comprises an amorphous double-chained-structure type clay mineral and an activated alumina, or an amorphous double-chained-structure type clay mineral with iron elements added thereto and an activated alumina. Moreover, at least one catalyst ingredient is loaded on the catalyst carrier layer. The major component of the amorphous double-chained-structure type clay mineral constituting the catalyst carrier layer is silica, and accordingly exhibits slightly poor adhesion to the catalyst support. Whereas, the activated alumina (especially, $\gamma$-alumina powder) includes hydroxyl groups in the form of $Al(OH)_3$, and accordingly exhibits good adhesion to the catalyst support. In view of these facts, the present catalyst employs the catalyst carrier layer in which the activated alumina is disposed at the internal portion, and the amorphous double-chained-structure type clay mineral is disposed at the superficial portion. As a result, the present catalyst hardly suffers from the problem in that the catalyst carrier layer is peeled off from the catalyst support by vibrations, and the like.

The present catalyst having the arrangement described above has improved catalytic activity as well. For instance, the present catalyst employs the catalyst carrier layer whose superficial portion is constituted by the amorphous double-chained-structure type clay mineral, or the amorphous double-chained-structure type clay mineral with iron elements added thereto. Hence, the present catalyst can oxidize HC, CO and SOF at low temperatures, and can inhibit the sulfates, resulting from the oxidation of $SO_2$, from being generated. Moreover, the amorphous double-chained-structure type clay mineral, or the like, can adsorb HC, CO and SOF in exhaust gases well, but hardly adsorbs $SO_2$ therein. Accordingly, the adsorbed components can be readily oxidized by the catalytic action of the loaded catalyst ingredient (e.g., a noble metal element). On the other hand, the activated alumina adsorbs all the gaseous components of exhaust gases (e.g., HC, CO, SOF, and $SO_2$). Consequently, the adsorbed HC, CO and SOF can be similarly converted by the catalytic action of the loaded catalyst ingredient (e.g., a noble metal element), but the adsorbed $SO_2$ is also oxidized to generate the sulfates. Thus, the employment of the activated alumina causes the drawbacks mentioned above.

On the contrary, as described earlier, the advantageous characteristics of the amorphous double-chained-structure type clay mineral, or the amorphous double-chained-structure type clay mineral with iron elements added thereto, and the advantageous characteristics of the activated alumina are simultaneously incorporated into the present catalyst. As a result, the present catalyst has enhanced ability to selectively oxidize HC, CO, and SOF.

Specifically, in the present catalyst, the amorphous double-chained-structure type clay mineral, or the amorphous double-chained-structure type clay mineral with iron elements added thereto, is disposed at the outermost layer of the present catalyst (i.e., at the superficial portion of the catalyst carrier layer). Hence, HC and CO are adsorbed by the amorphous double-chained-structure type clay mineral, or the like. Accordingly, the partial pressures of gaseous HC and CO decrease in the catalyst carrier layer. As a result, HC and CO existing around the present catalyst can further migrate into the present catalyst, and can be adsorbed by the activated alumina disposed at the internal portion of the catalyst carrier layer. Whilst, $SO_2$ is hardly adsorbed by the amorphous double-chained-structure type clay mineral, or the like. Consequently, the partial pressure of gaseous $SO_2$ in exhaust gases hardly fluctuates. As a result, $SO_2$ is less likely to migrate into the present catalyst. Thus, HC and CO are adsorbed in a large amount at the internal portion of the catalyst carrier layer, and accordingly can be oxidized by the catalytic action of the catalyst ingredient(e.g., a noble metal element). Then, the reaction heat associated with the oxidation increases the temperature of the present catalyst, and consequently SOF adsorbed on the surface of the present catalyst becomes likely to be oxidized. Therefore, the present catalyst can selectively oxidize HC, CO and SOF.

As having described so far, the present catalyst apparently has enhanced exhaust-gas-purifying performance as well as the adhering ability of the catalyst carrier layer with respect to the catalyst support.

DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

The present catalyst for purifying an exhaust gas emitted from a diesel engine can be prepared in the following manner: a catalyst support is first covered with a catalyst carrier layer. Then, a catalyst ingredient is loaded on the catalyst carrier layer. In particular, the catalyst carrier layer comprises an activated alumina, and a heat-resistant inorganic oxide, and is formed so that the heat-resistant inorganic oxide covers the activated alumina to constitute a superficial portion of the catalyst carrier layer. The heat-resistant inorganic oxide comprises a double-chained-structure type clay mineral which is turned into amorphous. The double-chained-structure type clay mineral can preferably be sepiolite which is turned into amorphous, or sepiolite which is turned into amorphous, and to which iron elements are added by means of an ion-exchanging process.

In the thus constructed present catalyst, the activated alumina is disposed inside the catalyst carrier layer so that the catalyst carrier layer has improved adhesion to the catalyst support. Moreover, the heat-resistant inorganic oxide comprising a double-chained-structure type clay mineral being turned into amorphous is disposed on the superficial portion outside the activated alumina, and a catalyst ingredient is loaded thereon. Accordingly, even at low temperatures, the present catalyst can remove the harmful substances, such as HC, CO, and "SOF", with enhanced capability.

In the present catalyst, the double-chained-structure type clay mineral, which is turned into amorphous, can be employed as a powder, and can be exemplified by the following: sepiolite ($Mg_8Si_{12}O_{30}(OH)_4(OH_2)_4 \cdot 8H_2O$), attapulgite (($Mg$, $Al)_5Si_8O_{20}(OH)_2(OH_2)_4 \cdot 4H_2O$), and palygorskite (($Mg$, $Al)_5Si_8O_{20}(OH)_2(OH_2)_4 \cdot 4H_2O$). These double-chained-structure type clay minerals are composed of hydro magnesium silicate as a major component, and has reactive hydroxyl groups on their asymmetric surfaces. Moreover, the double-chained-structure type clay minerals comprise particles having a diameter of from 0.06 to 0.6 $\mu$ m approximately. Crystals of the double-chained-structure type clay mineral form channels which run parallel to the lengthwise direction of the crystals, and which have a rectangular sectional area of 0.6 nm x 1 nm approximately. In addition, the double-chained-structure type clay mineral has a high BET specific surface area of from 350 to 400 $m^2$/g.

The double-chained-structure type clay mineral which is turned into amorphous can be prepared by pulverizing a double-chained-structure type clay mineral and thereafter thermally treating it in a temperature range of from 400 to 800 °C. The thermal treatment changes the structure of a double-chained-structure type clay mineral into amorphous.

Note that, when the heat treatment is carried out at a temperature of less than 400 °C, the structure of a double-chained-structure type clay mineral cannot be fully turned into amorphous. On the other hand, when the heat treatment is carried out at a temperature of more than 800 °C, a double-chained-structure type clay mineral is unpreferably turned into enstatite crystals which hinder metallic elements (e.g., a catalyst ingredient, and the like) from being added thereto, and which lacks pores. If the pores are lost, it is impossible to secure cites for adsorbing exhaust gases, and passages for diffusing exhaust gases in the resulting catalysts. It is further preferable to carry out the heat treatment in a temperature range of from 600 to 700 °C. In this preferred temperature range, a double-chained-structure type clay mineral is most likely to be turned into amorphous.

It is preferable to employ sepiolite as a double-chained-structure type clay mineral. In addition, it is also preferable to add iron elements to a double-chained-structure type clay mineral by means of an ion-exchanging process. As for additive metallic elements other than the iron elements, transition metal elements, such as Ni, Co and Mn, can effect the advantages of the present invention. Among the additive metallic elements, the iron elements are the most effective. A double-chained-structure type clay mineral with iron elements added thereto is preferred especially, because it can enhance the purifying performance of the present catalyst. Specifically, a double-chained-structure type clay mineral with iron elements added thereto can enhance the capability of the present catalyst for decomposing HC, CO, and "SOF" at low temperatures, and can also upgrade the capability thereof for inhibiting $SO_2$ from being oxidized.

The activated alumina constitutes an internal portion of the catalyst carrier layer, and can preferably be coated on the catalyst support in an amount of from 5 to 100 grams with respect to a unit volume (e.g., 1 L) of the present catalyst. When the activated alumina is coated on the catalyst support in an amount of less than 5 grams with respect to 1 L of the resulting catalyst, the resulting catalyst might not exhibit a satisfactory catalytic activity, and might be deteriorated in terms of the adhesion of double-chained-structure type clay mineral. When the activated alumina is coated on the catalyst support in an amount of more than 100 grams with respect to 1 L of the resulting catalyst, the resulting catalyst can hardly show an improved catalytic activity in proportion to the enlarged coating amount. In addition, the enlarged coating amount pushes up the manufacturing cost for the resulting catalyst. Thus, such an enlarged coating amount is not preferred. In view of the catalytic activity of the present catalyst and the manufacturing cost therefor, the activated alumina can be further preferably coated on the catalyst support in an amount of from 50 to 80 grams with respect to 1 L of the present catalyst.

In the present catalyst, the double-chained-structure type clay mineral, constituting the superficial portion of the catalyst carrier layer, is turned into amorphous, or is turned into amorphous and is further provided with iron elements. The double-chained-structure type clay mineral can preferably be prepared in the following manner: a double-chained-structure type clay mineral is pulverized, and is thereafter calcinated in a temperature range of from 400 to 800 °C, further preferably from 600 to 700 °C. Moreover, it is further preferable to add iron elements to the resultant amorphous double-chained-structure type clay mineral by means of an ion-exchanging process.

The thus prepared amorphous double-chained-structure type clay mineral or amorphous double-chained-structure type clay mineral with iron elements added thereto can be coated on the catalyst support in an amount of from 50 to 120 grams with respect to a unit volume (e.g., 1 L) of the present catalyst. When the coating amount is less than 50 grams with respect to 1 L of the resulting catalyst, the resulting catalyst might not exhibit a satisfactory catalytic activity. When the coating amount is more than 120 grams with respect to 1 L of the resulting catalyst, the resulting catalyst can hardly show an improved catalytic activity in proportion to the enlarged coating amount. In addition, the enlarged coating amount pushes up the manufacturing cost for the resulting catalyst. Thus, such an enlarged coating amount is not preferred. In view of the catalytic activity of the present catalyst and the manufacturing cost therefor, amorphous double-chained-structure type clay mineral or amorphous double-chained-structure type clay mineral with iron elements added thereto can be further preferably coated on the catalyst support in an amount of from 80 to 100 grams with respect to 1 L of the present catalyst.

In the present catalyst, the catalyst support can preferably comprise a porous substance, such as alumina, zeolite, zirconia, silica-alumina, and the combinations thereof. The porous-substance catalyst support can be a honeycomb body made from cordierite, heat-resistant metal, etc.

In the present catalyst, the catalyst ingredient loaded on the catalyst carrier layer can be a noble metal element, such as platinum (Pt), palladium (Pd), rhodium (Rh), and the combinations thereof. Among the noble metal elements, Pt is most preferred as the catalyst ingredient.

When Pt is employed as the catalyst ingredient, the loading amount of Pt can preferably fall in a range of from 0.01 to 5.0 grams with respect to a unit volume (e.g., 1 L) of the present catalyst. When the loading amount of Pt is less than 0.01 gram with respect to 1 L of the resulting catalyst, the resulting catalyst might not exhibit a satisfactory catalytic activity. When the loading amount of Pt is more than 5.0 grams with respect to 1 L of the resulting catalyst, the resulting catalyst can hardly show an improved catalytic activity in proportion to the enlarged loading amount. In addition, the enlarged loading amount pushes up the manufacturing cost for the resulting catalyst. Thus, such an enlarged loading amount is not preferred. In view of the catalytic activity of the present catalyst and the manufacturing cost therefor, the loading amount of Pt can further preferably fall in a range of from 0.1 to 3.0 grams with respect to 1 L of the present catalyst.

When Pd is employed as the catalyst ingredient, the loading amount of Pd can preferably fall in a range of from 0.1 to 5.0 grams with respect to a unit volume (e.g., 1 L) of the present catalyst. When the loading amount of Pd is less than 0.1 gram with respect to 1 L of the resulting catalyst, the resulting catalyst might not exhibit a satisfactory catalytic activity. When the loading amount of Pd is more than 5.0 grams with respect to 1 L of the resulting catalyst, the resulting catalyst can hardly show an improved catalytic activity in proportion to the enlarged loading amount. In addition, the enlarged loading amount pushes up the manufacturing cost for the resulting catalyst. Thus, such an enlarged loading amount is not preferred. In view of the catalytic activity of the present catalyst and the manufacturing cost therefor, the loading amount of Pd can further preferably fall in a range of from 0.5 to 3.0 grams with respect to 1 L of the present catalyst.

When Rh is employed as the catalyst ingredient, the loading amount of Rh can preferably fall in a range of from 0.01 to 1.0 gram with respect to a unit volume (e.g., 1 L) of the present catalyst. When the loading amount of Rh is less than 0.01 gram with respect to 1 L of the resulting catalyst, the resulting catalyst might not exhibit a satisfactory catalytic activity. When the loading amount of Rh is more than 1.0 gram with respect to 1 L of the resulting catalyst, the resulting catalyst can hardly show an improved catalytic activity in proportion to the enlarged loading amount. In addition, the enlarged loading amount pushes up the manufacturing cost for the resulting catalyst. Thus, such an enlarged loading amount is not preferred. In view of the catalytic activity of the present catalyst and the manufacturing cost therefor, the loading amount of Rh can further preferably fall in a range of from 0.05 to 0.5 grams with respect to 1 L of the present catalyst.

First Preferred Embodiment

A sepiolite powder, one of the double-chained-structure type clay minerals, was pulverized, and was calcinated at 600 °C for 5 hours, thereby preparing a sepiolite powder which was turned into amorphous (hereinafter simply referred to as an "amorphous sepiolite powder"). The resultant amorphous sepiolite powder was subjected to an X-ray diffraction analysis, and was actually verified to be amorphous.

In the meantime, a monolithic catalyst support was prepared, and was immersed into a first slurry. The employed monolithic catalyst support was made from cordierite, and had 400 cells in square inch (e.g., 400 cells/in$^2$), 80 mm in diameter, and 95 mm in length. The first slurry included an activated alumina powder, a silica sol, and deionized water. The monolithic catalyst support with the first slurry coated thereon was dried, and was thereafter calcinated at 500 °C for 1 hour to form an activated alumina layer thereon.

The resultant monolithic catalyst support with the activated alumina coated thereon was further immersed into a second slurry. The second slurry included the amorphous sepiolite powder, a silica sol, and deionized water. The monolithic catalyst support with the second slurry coated thereon was dried, and was thereafter calcinated at 500 °C for 1 hour. The monolithic catalyst support was thus coated with a coating layer in which the activated alumina layer was disposed at the internal portion and the amorphous sepiolite layer was disposed at the superficial portion.

Finally, the resulting monolithic catalyst support with the activated alumina layer and amorphous sepiolite layer coated thereon was immersed into an aqueous solution of a platinum ammine hydroxide salt ($[Pt(NH_3)_6](OH)_4$) to load platinum elements thereon. The monolithic catalyst support was thus provided with a catalyst carrier layer on which platinum elements were loaded, thereby completing a catalyst of a First Preferred Embodiment. Table 1 below sets forth the arrangement of the resultant catalyst.

Second Preferred Embodiment

The amorphous sepiolite powder, which was prepared in the same manner as the First Preferred Embodiment, was immersed in an aqueous solution of iron (II) chloride, and was thereby subjected to an ion-exchanging process. An amorphous sepiolite powder with iron elements added thereto was thus prepared.

In the meantime, a monolithic catalyst support was prepared, and was immersed into a first slurry. The employed monolithic catalyst support was made from cordierite, and had 400 cells in square inch (e.g., 400 cells/in$^2$), 80 mm in diameter, and 95 mm in length. The first slurry included an activated alumina powder, a silica sol, and deionized water. The monolithic catalyst support with the first slurry coated thereon was dried, and was thereafter calcinated at 500 °C for 1 hour to form an activated alumina layer thereon.

The resultant monolithic catalyst support with the activated alumina coated thereon was further immersed into a second slurry. The second slurry included the amorphous sepiolite powder with iron elements added thereto, a silica sol, and deionized water. The monolithic catalyst support with the second slurry coated thereon was dried, and was thereafter calcinated at 500 °C for 1 hour. The monolithic support catalyst was thus coated with a coating layer in which the activated alumina layer was disposed at the internal portion and the iron-added amorphous sepiolite layer was disposed at the superficial portion.

Finally, the resulting monolithic catalyst support with the activated alumina layer and iron-added amorphous sepiolite layer coated thereon was immersed into an aqueous solution of a platinum ammine hydroxide salt ($[Pt(NH_3)_6](OH)_4$) to load platinum elements thereon. The monolithic catalyst support was thus provided with a catalyst carrier layer on which platinum elements were loaded, thereby completing a catalyst of a Second Preferred Embodiment. Table 2 below sets forth the arrangement of the resultant catalyst.

Third Preferred Embodiment

Except that an aqueous solution of a palladium ammine hydroxide salt ($[Pd(NH_3)_4](OH)_2$) was used instead of the aqueous solution of a platinum ammine hydroxide salt used in the Second Preferred Embodiment, a catalyst of a Third Preferred Embodiment was prepared in the same manner as the Second Preferred Embodiment. Table 2 below sets forth the arrangement of the resultant catalyst.

Fourth Preferred Embodiment

Except that an aqueous solution of a rhodium ammine hydroxide salt ($[Rh(NH_3)_6](OH)_3$) was used instead of the aqueous solution of a platinum ammine hydroxide salt used in the Second Preferred Embodiment, a catalyst of a Fourth Preferred Embodiment was prepared in the same manner as the Second Preferred Embodiment. Table 2 below sets forth the arrangement of the resultant catalyst.

Filth Preferred Embodiment

Except that the catalyst of the Second Preferred Embodiment was further immersed into an aqueous solution of a rhodium ammine hydroxide salt to further load rhodium elements thereon, a catalyst of a Fifth Preferred Embodiment was prepared in the same manner as the Second Preferred Embodiment. Table 2 below sets forth the arrangement of the resultant catalyst.

Sixth through Eighth Preferred Embodiments

Except that the loading amounts of platinum and rhodium elements were diversified as recited in Table 2 below, a catalyst of Sixth through Eighth Preferred Embodiments were prepared in the same manner as the Filth Preferred Embodiment. Table 2 below sets forth the arrangement of the resultant catalysts.

Ninth Preferred Embodiment

Except that the catalyst of the Third Preferred Embodiment was further immersed into an aqueous solution of a rhodium ammine hydroxide salt to further load rhodium elements thereon, a catalyst of a Ninth Preferred Embodiment was prepared in the same manner as the Third Preferred Embodiment. Table 2 below sets forth the arrangement of the resultant catalyst.

Tenth Preferred Embodiment

Except that the platinum elements were loaded in a decreased amount of 0.5 g with respect to 1 L of the resulting catalyst in the same manner as the Second Preferred Embodiment, and that the resulting catalyst was further immersed into aqueous solutions of a palladium ammine hydroxide salt and a rhodium ammine hydroxide salt to further load palladium elements and rhodium elements thereon, a catalyst of a Tenth Preferred Embodiment was prepared in the same manner as the Second Preferred Embodiment. Table 2 below sets forth the arrangement of the resultant catalyst.

Comparative Example No. 1

A monolithic catalyst support was prepared, and was immersed into a first slurry. The employed monolithic catalyst support was made from cordierite, and had 400 cells in square inch (e.g., 400 cells/in$^2$), 80 mm in diameter, and 95 mm in length. The first slurry included an activated alumina powder, hydrated alumina, and deionized water. The monolithic catalyst support with the first slurry coated thereon was dried, and was further immersed into a second slurry. The second slurry had the same composition as that of the first slurry. Likewise, the monolithic catalyst support with the second slurry coated thereon was dried. Then, the monolithic catalyst support with the double-coated activated alumina layer was calcinated at 500 °C for 1 hour to form a double-coated activated alumina layer.

Finally, the resulting monolithic catalyst support with the double-coated activated alumina layer was immersed into an aqueous solution of a platinum ammine hydroxide salt to load platinum elements thereon. The monolithic catalyst support was thus provided with a catalyst carrier layer on which platinum elements were loaded, thereby completing a catalyst of Comparative Example No. 1. Table 1 below sets forth the arrangement of the resultant catalyst.

Comparative Example No. 2

A monolithic catalyst support was prepared, ad was immersed into a first slurry. The employed monolithic catalyst support was made from cordierite, and had 400 cells in square inch (e.g., 400 cells/in$^2$), 80 mm in diameter, and 95 mm in length. The first slurry included an activated alumina powder, hydrated alumina, and deionized water. The monolithic catalyst support with the first slurry coated thereon was dried, and was further immersed into a second slurry. The second slurry had the same composition as that of the first slurry. Likewise, the monolithic catalyst support with the second slurry coated thereon was dried. Then, the monolithic catalyst support with the double-coated activated alumina layer was immersed into an aqueous solution of iron (III) nitrate, and was dried thereafter. Then, the monolithic catalyst support was calcinated at 500 °C for 1 hour to form a double-coated and iron-containing activated alumina layer.

Finally, the resulting monolithic catalyst support with the double-coated and iron-containing activated alumina layer was immersed into an aqueous solution of a platinum ammine hydroxide salt to load platinum elements thereon. The monolithic catalyst support was thus provided with a catalyst carrier layer on which platinum elements were loaded, thereby completing a catalyst of Comparative Example No. 2. Table 2 (bis) below sets forth the arrangement of the resultant catalyst.

Comparative Example No. 3

Except that an aqueous solution of palladium nitrate was used instead of the aqueous solution of a platinum ammine hydroxide salt used in Comparative Example No. 2, a catalyst of Comparative Example No. 3 was prepared in the same manner as Comparative Example No. 2. Table 2 (bis) below sets forth the arrangement of the resultant catalyst.

Comparative Example No. 4

Except that an aqueous solution of rhodium nitrate was used instead of the aqueous solution of a platinum ammine hydroxide salt used in Comparative Example No. 2, a catalyst of Comparative Example No. 4 was prepared in the same manner as Comparative Example No. 2. Table 2 (bis) below sets forth the arrangement of the resultant catalyst.

Comparative Example No. 5

Except that the catalyst of Comparative Example No. 2 was further immersed into an aqueous solution of rhodium nitrate to further load rhodium elements thereon, a catalyst of Comparative Example No. 5 was prepared in the same manner as Comparative Example No. 2. Table 2 (bis) below sets forth the arrangement of the resultant catalyst.

Comparative Example No. 6

Except that the catalyst of Comparative Example No. 3 was further immersed into an aqueous solution of rhodium nitrate to further load rhodium elements thereon, a catalyst of Comparative Example No. 6 was prepared in the same manner as Comparative Example No. 3. Table 2 (bis) below sets forth the arrangement of the resultant catalyst.

Comparative Example No. 7

Except that the platinum elements were loaded in a decreased amount of 0.5 g with respect to 1 L of the resulting catalyst in the same manner as Comparative Example No. 2, and that the resulting catalyst was further immersed into aqueous solutions of palladium nitrate and rhodium nitrate to further load palladium elements and rhodium elements thereon, a catalyst of Comparative Example No. 7 was prepared in the same manner as Comparative Example No. 2. Table 2 (bis) below sets forth the arrangement of the resultant catalyst.

Comparative Example No. 8

A monolithic catalyst support was prepared, and was immersed into a first slurry. The employed monolithic catalyst support was made from cordierite, and had 400 cells in square inch (e.g., 400 cells/in$^2$), 80 mm in diameter, and 95 mm in length. The first slurry included an activated alumina powder, hydrated alumina, and pure water. The monolithic catalyst support with the first slurry coated thereon was dried, and was thereafter calcinated at 500 °C for 1 hour to form an activated alumina layer thereon.

In the meantime, a silica powder was immersed into an aqueous solution of iron (II) chloride, and was dried thereafter. Then, the silica powder was calcinated at 500 °C for 1 hour to prepare a silica powder containing iron.

The monolithic catalyst support with the activated alumina coated thereon was further immersed into a second slurry. The second slurry included the iron-containing silica powder, a silica sol, and deionized water. Then, the monolithic catalyst support with the second slurry coated thereon was dried. The monolithic support catalyst was thus coated with a coating layer in which the activated alumina layer was disposed at the inner portion and the iron-containing silica layer was disposed at the superficial portion.

Finally, the resulting monolithic catalyst support with the activated alumina layer and the iron-containing silica layer coated thereon was immersed into aqueous solutions of a platinum ammine hydroxide salt and a rhodium ammine hydroxide salt to load platinum elements and rhodium elements thereon. The monolithic catalyst support was thus provided with a catalyst carrier layer on which platinum and rhodium elements were loaded, thereby completing a catalyst of Comparative Example No. 8. Table 2 (bis) below sets forth the arrangement of the resultant catalyst.

Comparative Example No. 9

A monolithic catalyst support was prepared, and was immersed into a first slurry. The employed monolithic catalyst support was made from cordierite, and had 400 cells in square inch (e.g., 400 cells/in$^2$), 80 mm in diameter, and 95 mm in length. The first slurry included an alumina powder, hydrated alumina, and deionized water. The monolithic catalyst support with the first slurry coated thereon was dried, and was thereafter calcined at 500 °C for 1 hour to form an alumina layer thereon.

In the meantime, a titania powder was immersed into an aqueous solution of iron (III) nitrate, and was dried thereafter. Then, the titania powder was calcined at 500 °C for 1 hour to prepare a titania powder containing iron elements.

The monolithic catalyst support with the alumina coated thereon was further immersed into a second slurry. The second slurry included the iron-containing titania powder, a titania sol, and pure water. The monolithic catalyst support with the second slurry coated thereon was dried, and was thereafter calcined at 500 °C for 1 hour. The monolithic catalyst support was thus coated with a coating layer in which the alumina layer was disposed at the inner portion and the iron-containing titania layer was disposed at the superficial portion.

Finally, the resulting monolithic catalyst support with the alumina layer and the iron-containing titania layer coated thereon was immersed into aqueous solutions of a platinum ammine hydroxide salt and rhodium nitrate to load platinum elements and rhodium elements thereon. The monolithic catalyst support was thus provided with a catalyst carrier layer on which platinum and rhodium elements were loaded, thereby completing a catalyst of Comparative Example No. 9. Table 2 (bis) below sets forth the arrangement of the resultant catalyst.

Comparative Example No. 10

A sepiolite powder, one of the double-chained-structure type clay minerals, was pulverized, and was calcined at 600 °C for 5 hours, thereby preparing a sepiolite powder which was turned into amorphous. The resultant amorphous sepiolite powder was subjected to an X-ray diffraction analysis, and was actually verified to be amorphous.

The amorphous sepiolite powder was immersed in an aqueous solution of iron (II) chloride, and was thereby subjected to an ion-exchanging process. An amorphous sepiolite powder with iron elements added thereto was thus prepared.

In the meantime, a monolithic catalyst support was prepared, and was immersed into a first slurry. The employed monolithic catalyst support was made from cordierite, and had 400 cells in square inch (e.g., 400 cells/in$^2$), 80 mm in diameter, and 95 mm in length. The first slurry included the amorphous sepiolite powder with iron elements added thereto, a silica sol, and deionized water. The monolithic catalyst support with the first slurry coated thereon was dried, and was thereafter calcined at 500 °C for 1 hour to form an iron-added amorphous sepiolite layer thereon.

Finally, the resulting monolithic catalyst support with the iron-added amorphous sepiolite layer coated thereon was immersed into aqueous solutions of a platinum ammine hydroxide salt and a rhodium ammine hydroxide salt to load platinum elements and rhodium elements thereon. The monolithic catalyst support was thus provided with a catalyst carrier layer on which platinum and rhodium elements were loaded, thereby completing a catalyst of Comparative Example No. 10. Table 2 (bis) below sets forth the arrangement of the resultant catalyst.

Comparative Example No. 11

A monolithic catalyst support was prepared, and was immersed into a slurry. The employed monolithic catalyst support was made from cordierite, and had 400 cells in square inch (e.g., 400 cells/in$^2$), 80 mm in diameter, and 95 mm in length. The slurry included a titania powder, a titania sol, and deionized water. The monolithic catalyst support with the slurry coated thereon was dried to form a titania layer thereon.

Finally, the resulting monolithic catalyst support with the titania coated thereon was immersed into aqueous solutions of a platinum ammine hydroxide salt and a rhodium ammine hydroxide salt to load platinum elements and rhodium elements thereon. The monolithic catalyst support was thus provided with a catalyst carrier layer on which platinum and rhodium elements were loaded, thereby completing a catalyst of Comparative Example No. 11. Table 2 (bis) below sets forth the arrangement of the resultant catalyst.

EP 0 781 590 A1

TABLE 1

| Identification | Catalyst Carrier Layer | | Catalyst Ingredient Loading Amount (g/L) | | | Conversion at 250 ℃ (%) | | Particulates Conversion at 350 ℃ (%) | Adhesion Strength of Catalyst Carrier Layer |
|---|---|---|---|---|---|---|---|---|---|
| | Internal Portion | Superficial Portion | Pt | Pd | Rh | HC | CO | | |
| 1st Pref. Embodiment | Al₂O₃ | Amorphous Sepiolite | 1.0 | none | none | 78 | 88 | 20 | ◎ |
| Comparative Ex. No. 1 | Al₂O₃ | Al₂O₃ | 1.0 | none | none | 75 | 86 | -43 | ◎ |

## TABLE 2

| Identification | Catalyst Carrier Layer | | Catalyst Ingredient Loading Amount (g/L) | | | Conversion at 250 ℃ (%) | | Particulates Conversion at 350 ℃ (%) | Adhesion Strength of Catalyst Carrier Layer |
|---|---|---|---|---|---|---|---|---|---|
| | Internal Portion | Superficial Portion | Pt | Pd | Rh | HC | CO | | |
| 2nd Pref. Embodiment | Al₂O₃ | Amorphous Sepiolite with Fe added | 1.0 | none | none | 83 | 94 | 28 | ◎ |
| 3rd Pref. Embodiment | Al₂O₃ | ditto | none | 1.0 | none | 47 | 48 | 27 | ◎ |
| 4th Pref. Embodiment | Al₂O₃ | ditto | none | none | 1.0 | 45 | 45 | 25 | ◎ |
| 5th Pref. Embodiment | Al₂O₃ | ditto | 1.0 | none | 0.2 | 79 | 85 | 27 | ◎ |
| 6th Pref. Embodiment | Al₂O₃ | ditto | 0.5 | none | 0.2 | 72 | 82 | 24 | ◎ |
| 7th Pref. Embodiment | Al₂O₃ | ditto | 1.5 | none | 0.2 | 85 | 97 | 20 | ◎ |
| 8th Pref. Embodiment | Al₂O₃ | ditto | 2.0 | none | 0.2 | 87 | 97 | 22 | ◎ |
| 9th Pref. Embodiment | Al₂O₃ | ditto | none | 1.0 | 0.2 | 49 | 48 | 26 | ◎ |
| 10th Pref. Embodiment | Al₂O₃ | ditto | 0.5 | 0.5 | 0.2 | 57 | 70 | 24 | ◎ |

EP 0 781 590 A1

TABLE 2 (bis)

| Identi-fication | Catalyst Carrier Layer | | Catalyst Ingredient Loading Amount (g/L) | | | Conversion at 250 °C (%) | | Particulates Conversion at 350 °C (%) | Adhesion Strength of Catalyst Carrier Layer |
|---|---|---|---|---|---|---|---|---|---|
| | Internal Portion | Superficial Portion | Pt | Pd | Rh | HC | CO | | |
| Comparative Ex. No. 2 | $Al_2O_3$ | $Al_2O_3$ containing Fe | 1.0 | none | none | 83 | 94 | -43 | ◎ |
| Comparative Ex. No. 3 | $Al_2O_3$ | $Al_2O_3$ containing Fe | none | 1.0 | none | 35 | 30 | 28 | ◎ |
| Comparative Ex. No. 4 | $Al_2O_3$ | $Al_2O_3$ containing Fe | none | none | 1.0 | 32 | 28 | 27 | ◎ |
| Comparative Ex. No. 5 | $Al_2O_3$ | $Al_2O_3$ containing Fe | 1.0 | none | 0.2 | 70 | 80 | 2 | ◎ |
| Comparative Ex. No. 6 | $Al_2O_3$ | $Al_2O_3$ containing Fe | none | 1.0 | 0.2 | 41 | 42 | 15 | ◎ |
| Comparative Ex. No. 7 | $Al_2O_3$ | $Al_2O_3$ containing Fe | 0.5 | 0.5 | 0.2 | 52 | 62 | 19 | ◎ |
| Comparative Ex. No. 8 | $Al_2O_3$ | $SiO_2$ containing Fe | 1.0 | none | 0.2 | 50 | 65 | 15 | ◎ |
| Comparative Ex. No. 9 | $Al_2O_3$ | $TiO_2$ containing Fe | 1.0 | none | 0.2 | 51 | 62 | 13 | ◎ |
| Comparative Ex. No. 10 | none | Amorphous Sepiolite with Fe added | 1.0 | none | 0.2 | 81 | 91 | 26 | ○ |
| Comparative Ex. No. 11 | $TiO_2$ | $TiO_2$ | 1.0 | none | 0.2 | - | - | - | △ |

(Note) In the evaluation of the catalyst of Comparative Example No. 11, the catalyst carrier layer came off from the monolithic catalyst support so that the conversions of HC and CO, and the conversion of particulates could not be measured.

Examination and Evaluation
on
Exhaust Gas Purifying Performance

The catalysts prepared as described above were installed in an exhaust purifying system of a 3.6-L direct-fuel-injection diesel engine, respectively. The diesel engine was operated at a rated 3,600 rpm and full-throttle for 500 hours, and was thereafter operated at a revolving speed of 2,500 rpm, and at a torque of 8 KW. Under the operating condition, the exhaust gas was analyzed for the concentrations of HC, and CO at the inlet of the catalysts, and at the outlet thereof. The conversions of HC, and CO were calculated by the following equation. Note that the exhaust gas had a temperature of 250 °C at the inlet of the catalysts, and that the samples of SOF were collected by a dilution tunnel and the concentration of SOF was analyzed quantitatively by using a Soxhlet extractor. Then, the diesel engine was further operated at a revolving speed of 2,500 rpm, and at a torque of 25 KW. Under the operating condition, the exhaust gas was analyzed for the concentration of particulates at the inlet of the catalysts, and at the outlet thereof. Note that, in the latter evaluation, the exhaust gas had a temperature of 350 °C at the inlet of the catalysts. The conversion of particulates was also calculated by the following equation:

Conversion (%) = [{(Concentration of Exhaust Gas Component at Catalyst Inlet) - (Concentration of Exhaust Gas Component at Catalyst Outlet)}/(Concentration of Exhaust Gas Component at Catalyst Inlet)] x 100.

The results of these examinations are summarized in Tables 1 and 2 above.

Examination and Evaluation
on
Adhesion Strength of Catalyst Carrier Layer

The catalysts of the First through Tenth Preferred Embodiments as well as Comparative Example Nos. 1 through 11 were blown by air at a pressure of 4 MPa, and were examined for their weight variation before and after the air-blowing operation. According to the weight variation, an adhesion strength of their catalyst carrier layer was evaluated by the following criteria:

when the weight variation was 3% or less, the catalyst carrier layer exhibited a remarkably strong adhesion strength;
when the weight variation was in a range of from 3% to 5%, the catalyst carrier layer exhibited a strong adhesion strength; and
when the weight variation was 5% or more, the catalyst carrier layer exhibited a poor adhesion strength.

The results of this evaluation are also summarized in Tables 1 and 2 above. In Tables 1 and 2, the mark "◎" designates the catalyst had the catalyst carrier layer which exhibited a remarkably strong adhesion strength; the mark "○" designates the catalyst had the catalyst carrier layer which exhibited a strong adhesion strength; and the mark "△" designates the catalyst had the catalyst carrier layer which exhibited a poor adhesion strength.

It is appreciated from Table 1 that, in the catalyst of the First Preferred Embodiment and that of Comparative Example No. 1, the conversions for HC and CO were equivalent virtually. However, in the catalyst of the First Preferred Embodiment, the conversion for particulates was improved remarkably. On the other hand, in the catalyst of Comparative Example No. 1, the conversion for particulates was negative, because sulfates, resulted from the oxidation of $SO_2$, increased the concentration of particulates at the outlet of the catalyst of Comparative Example No. 1 as compared to the concentration of particulates at the inlet thereof.

In order to compare the exhaust gas purifying performance of the Second through Tenth Preferred Embodiments shown in Table 2 with that of Comparative Example Nos. 2 through 11 shown in Table 2 (bis), the exhaust gas purifying performance of a catalyst of the preferred embodiments with specific noble metal elements loaded thereon is compared with that of a catalyst of comparative examples with the same specific noble metal elements loaded thereon.

For example, let us compare the exhaust gas purifying performance of the Second Preferred Embodiment, on which platinum elements were loaded, with that of Comparative Example No. 2, on which the same platinum elements were loaded. It is appreciated from Table 2 that the catalyst of the Second Preferred Embodiment exhibited conversions for both HC and CO as high as that of the catalyst of Comparative Example No. 2. However, the catalyst of the Second Preferred Embodiment exhibited a higher conversion for particulates than the catalyst of Comparative Example No. 2 did. In fact, the catalyst of Comparative Example No. 2 exhibited a negative conversion for particulates. It is believed that, in the same manner as the Comparative Example No. 1, the catalyst of Comparative Example No. 2 produced sulfates, which resulted from the oxidation of $SO_2$, in a larger amount than it converted SOF. As a result, the concentration of particulates at the outlet of the catalyst of Comparative Example No. 2 was greater than the concentration of particulates at the inlet thereof.

When the catalyst of the Fourth Preferred Embodiment is compared with that of Comparative Example No. 4, the catalyst of the Fourth Preferred Embodiment exhibited a conversion for particulates which was substantially identical with the conversion exhibited by the catalyst of Comparative Example No. 4. However, the catalyst of the Fourth Preferred Embodiment exhibited higher conversions for HC and CO than those exhibited by the catalyst of Comparative Example No. 4. It was verified that, in the catalyst of Comparative Example No. 4, particulates were adsorbed thereon, but the adsorbed particulates were not burned at all. Hence, it is believed that the catalyst of Comparative Example No. 4 exhibited the slightly increased conversion for particulates.

When the catalyst of the Ninth Preferred Embodiment is compared with that of Comparative Example No. 6, the catalyst of the Ninth Preferred Embodiment exhibited higher conversions for all of HC, CO, and particulates than those exhibited by the catalyst of Comparative Example No. 6. Thus, it is apparent that the catalyst of the Ninth Preferred Embodiment could selectively convert the harmful exhaust gas components.

In addition, it is apparent from the results of the catalyst-carrier-layer adhesion strength test recited in Table 2 that the catalyst-carrier-layer arrangement according to the present invention improved the adhesion strength of the catalyst carrier layer in the catalysts of the Second through Tenth Preferred Embodiments over that of the catalyst carrier layer in the catalysts of Comparative Example Nos. 10 and 11.

Having now fully described the present invention, it will be apparent to one of ordinary skill in the art that many changes and modifications can be made thereto without departing from the spirit or scope of the present invention as set forth herein including the appended claims.

**Claims**

1. A catalyst for purifying an exhaust gas emitted from a diesel engine, comprising:

   a catalyst support;
   a catalyst carrier layer formed on said catalyst support, having a superficial portion and an internal portion disposed inside the superficial portion, and comprising an activated alumina and a beat-resistant inorganic oxide;
   said heat-resistant inorganic oxide comprising a double-chained-structure type clay mineral, being turned into amorphous, and constituting said superficial portion of said catalyst carrier layer; and
   at least one catalyst ingredient selected from the group consisting of platinum, palladium and rhodium, being loaded on said catalyst carrier layer.

2. The catalyst according to Claim 1, wherein said double-chained-structure type clay mineral is sepiolite which is turned into amorphous.

3. The catalyst according to Claim 1, wherein said double-chained-structure type clay mineral is sepiolite which is turned into amorphous, and to which iron elements are added by means of an ion-exchanging process.

4. The catalyst according to Claim 1, wherein said double-chained-structure type clay mineral is prepared by pulverizing a double-chained-structure type clay mineral and thereafter thermally treating it in a temperature range of from 400 to 800 °C.

5. The catalyst according to Claim 1, wherein said double-chained-structure type clay mineral is coated on said catalyst support in an amount of from 50 to 120 grams with respect to 1 L of the catalyst.

6. The catalyst according to Claim 1, wherein said activated alumina is coated on said catalyst support in an amount of from 5 to 100 grams with respect to 1 L of the catalyst.

7. The catalyst according to Claim 1, wherein said catalyst ingredient is platinum, and is loaded on said catalyst carrier layer in an amount of from 0.01 to 5.0 grams with respect to 1 L of the catalyst.

8. The catalyst according to Claim 1, wherein said catalyst ingredient is palladium, and is loaded on said catalyst carrier layer in an amount of from 0.1 to 5.0 grams with respect to 1 L of the catalyst.

9. The catalyst according to Claim 1, wherein said catalyst ingredient is rhodium, and is loaded on said catalyst carrier layer in an amount of from 0.01 to 1.0 gram with respect to 1 L of the catalyst.

**European Patent Office**  **EUROPEAN SEARCH REPORT**  Application Number

EP 96 12 0859

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | DATABASE WPI<br>Section Ch, Week 9520<br>Derwent Publications Ltd., London, GB;<br>Class E19, AN 95-151545<br>XP002028328<br>& JP 07 075 738 A (TOYOTA CHUO KENKYUSHO KK) , 20 March 1995<br>* abstract *<br>--- | 1-5,7-9 | B01D53/94<br>B01J21/16 |
| Y | DATABASE WPI<br>Section Ch, Week 8425<br>Derwent Publications Ltd., London, GB;<br>Class H06, AN 84-154755<br>XP002028329<br>& JP 59 080 330 A (CATALAR KOGYO KK) , 9 May 1984<br>* abstract *<br>--- | 1-5,8 | |
| Y | EP 0 372 156 A (NIPPON CATALYTIC CHEM IND) 13 June 1990<br>* the whole document *<br>--- | 7,9 | TECHNICAL FIELDS SEARCHED (Int.Cl.6) |
| A | DATABASE WPI<br>Section Ch, Week 8027<br>Derwent Publications Ltd., London, GB;<br>Class E36, AN 80-47163C<br>XP002028330<br>& JP 55 067 334 A (TANAKA MATTHEY KK) , 22 May 1980<br>* abstract *<br>--- | 1,5,6 | B01D<br>B01J |
| A | PATENT ABSTRACTS OF JAPAN<br>vol. 016, no. 168 (C-0932), 22 April 1992<br>& JP 04 016236 A (TOYOTA CENTRAL RES & DEV LAB INC), 21 January 1992,<br>* abstract *<br>--- | 1-4 | |
| | -/-- | | |

The present search report has been drawn up for all claims

| Place of search | Date of completion of the search | Examiner |
|---|---|---|
| BERLIN | 26 March 1997 | Cubas Alcaraz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 96 12 0859

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DATABASE WPI<br>Section Ch, Week 8035<br>Derwent Publications Ltd., London, GB;<br>Class H06, AN 80-61429C<br>XP002028331<br>& JP 55 094 646 A (MITSUI MINING &<br>SMELTING) , 19 July 1980<br>* abstract *<br>--- | 1,6 | |
| A | DATABASE WPI<br>Section Ch, Week 9445<br>Derwent Publications Ltd., London, GB;<br>Class E36, AN 94-362752<br>XP002028332<br>& JP 06 285 371 A (ICT KK) , 11 October<br>1994<br>* abstract *<br>--- | 1,5-9 | |
| P,A | US 5 492 878 A (FUJII JUN  ET AL) 20<br>February 1996<br>* the whole document *<br>----- | 1,5-9 | TECHNICAL FIELDS SEARCHED     (Int.Cl.6) |

The present search report has been drawn up for all claims

| Place of search | Date of completion of the search | Examiner |
|---|---|---|
| BERLIN | 26 March 1997 | Cubas Alcaraz, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)